# EUROPEAN PATENT SPECIFICATION

(11) **EP 4 191 210 B1**
(45) Date of publication and mention of the grant of the patent: **06.03.2024**
(21) Application number: 21212192.5
(22) Date of filing: 03.12.2021
(51) Int. Cl.: G01F 23/284, G01S 13/10, G01S 13/88, B65D 21/08

(54) **FOLDABLE CONTAINER COMPRISING A FILL LEVEL SENSOR**
FALTBARER BEHÄLTER MIT FÜLLSTANDSSENSOR
RÉCIPIENT PLIABLE COMPRENANT UN CAPTEUR DE NIVEAU DE REMPLISSAGE

(43) Date of publication of application: 07.06.2023
(73) Proprietor: Schoeller Allibert GmbH, 19057 Schwerin (DE)
(72) Inventor: DEJANS, Frederik, 8860 Lendelede (BE); VOS, Theodoor Henk Vincent, 7881 RN, Emmer-Compascuum (NL)
(74) Representative: Winter, Brandl - Partnerschaft mbB

(56) References cited:
- WO-A1-2015/107217
- US-A- 4 566 321
- US-A- 5 899 111
- US-A- 6 118 134

## Description

### Technical field

The present disclosure relates to a foldable container including a fill level sensor provided in a peripheral wall of the container to measure a level of a material, in particular a liquid material, located in the container

### Background art

Containers are used in almost all industrial sectors. Among other things, liquid or free-flowing material is also stored in containers and pumped out of the containers or discharged by means of gravity in order to be further processed.

Containers are often made of a non-transparent material, so it would be necessary to open the container to check the current level. However, this is not possible in many applications, such as in the food industry, due to possible contamination of the material contained in the container. In order to reliably monitor a fill level in the container, for example to prevent a filling system from running dry, the container can be equipped with a fill level sensor.

For this purpose, in DE 10 2015 100 414 A1, a signal conductor arrangement is formed in a side wall of the container. An electronic device evaluates whether or not the signal conductor arrangement is in contact with the medium stored in the container or not. One drawback of this design is that it is only possible to monitor whether the level is below a previously defined level (at the height of the signal conductor arrangement) or not. This makes it difficult to estimate when supplies need to be ordered from a control centre located remotely from the container, if the position of the signal conductor arrangement is not exactly matched to a reorder time. Especially in times of just-in-sequence and just-in-time production planning, this is insufficient and increases the risk of production downtime or increases inventory costs.

US 6 118 134 A discloses a method and apparatus for determining a fill level of a storage tank in zero gravity conditions, by determination of an amount of radiation absorbed by a filling material, using an integrating sphere principle.

WO 2015 / 107 217 A1 discloses a device and a method for conveying a fluent material, comprising a fill level sensor.

US 5 899 111 A1 discloses a remote water level detector for a fire truck for allowing a fireman to remain adjacent to a fire truck while monitoring a water level within a foldable water tank.

An object of the present disclosure is therefore to overcome or at least reduce the disadvantages of the prior art.

Specifically, it is the object of the present disclosure to provide a container that enables continuous monitoring of a fill level in the container without having to open the container and without having to inspect the container in person.

The object is solved by a container according to independent claim 1. Advantageous further embodiments are defined in one or more dependent claims.

Specifically, the object is solved by a container comprising a bottom wall, and a peripheral wall comprising a plurality of side walls. Optionally, the container may be provided with a lid for closing the container. A fill level sensor is provided in the peripheral wall for measuring a level of a stored material, in particular a liquid or pourable filling material, located in the container. In order to determine the level of the material stored in the container, the fill level sensor emits radiation at an acute angle, relative to the peripheral wall, in a direction to the bottom wall or in a downward direction. Thus, the fill level sensor emits radiation in an oblique direction onto the surface of the material stored in the container.

In other words the container according to the present disclosure comprises the bottom wall and the peripheral wall, which extends from the bottom wall at substantially a right angle. The fill level sensor is provided in the peripheral wall in a mounting designated to keep the fill level sensor fixed in the peripheral wall. The fill level sensor is provided and configured to detect any level of the material below the fill level sensor.

In still other words, the fill level sensor is provided to detect a distance between the fill level sensor and the surface of the material contained in the container and to calculate / determine the fill level of the container from this distance. The fill level sensor is a radiation emitting sensor. The fill level sensor emits a radiation towards the bottom wall. An acute angle is formed between the emitted radiation and the peripheral wall in which the fill level sensor is located.

The radiation emitted from the fill level sensor at an angle into the container makes it possible to determine the distance between the fill level sensor and the surface of the material. From the determined distance, the exact level of the container can be determined at any time. The fact that the sensor is installed in the peripheral wall and not, for example, in a lid, means that it is impossible for errors to occur due to a mix-up of lids.

In another aspect of the present disclosure, the fill level sensor may be integrated completely and without protrusion in the peripheral wall.

In other words, the fill level sensor may be integrated completely flush with an inner surface of the peripheral wall and completely flush with an outer surface of the peripheral wall.

The full integration of the fill level sensor allows tighter packing of the containers. In addition, edges are avoided where dirt and residues of the material stored inside the container could collect. This makes cleaning of the container considerably easier. In addition, the risk of damage to the fill level sensor is considerably reduced, because in the event of a collision between, for example, two containers or a container and a wall, the entire force does not act on the fill level sensor alone, but is dissipated via the entire peripheral wall.

In another aspect of the present disclosure, the fill level sensor may determine the level in the container by a time of flight.

In other words, the fill level sensor may emit a radiation in the direction to the bottom wall. The radiation then is reflected by the surface of the material stored in the container. The distance between the sensor and the surface is determined from the time it takes the emitted radiation to reach the surface of the material stored in the container and back to the fill level sensor. For this purpose, the determined time span is compared with a stored database.

The time-of-flight method is relatively robust even with changing materials and environmental conditions.

In another aspect of the present disclosure, the fill level sensor may determine the level in the container by means of a radar principle, in particular by means of a pulsed coherent radar (PCR) principle.

In other words, the fill level sensor may be a radar sensor, which uses a single frequency that pulses at a specific interval. A transmitter of the fill level sensor is switched off between individual pulses and has a known start phase at the beginning of each pulse burst.

The pulse coherent radar principle is energy-saving because the transmitter of the fill level sensor is deactivated between individual pulses. In this way, long autonomous working phases of the sensor are possible with only a small energy storage.

In another aspect, the fill level sensor may exclusively be provided in a quarter portion of the peripheral wall facing away from the bottom wall.

In other words, the fill level sensor may be located as far as possible from the bottom wall in the peripheral wall.

By spacing the sensor as far as possible from the bottom wall, a large measurement spectrum can be ensured and even very high levels of material stored in the container can be detected by the fill level sensor.

In another aspect, the radiation emitted by the fill level sensor may be emitted in a pointed cone shape, wherein a cone tip may be arranged in the fill level sensor.

In other words, the radiation emitted by the fill level sensor may fan out, starting from the fill level sensor, with increasing distance to the fill level sensor. A cross-sectional area of the radiation is preferably oval to circular.

The fanning out of the radiation ensures that the surface of the material in the container is reliably detected and false measurements can be prevented.

For example, it is possible to measure the level at different points on the surface of the material and form an average value from this. In this way, the accuracy of the level determination can be improved.

In another aspect, the cone base surface of the radiation may completely be inscribable into the bottom wall surface of the bottom wall.

In other words, the radiation emitted by the fill level sensor may first reach the surface of the material or, in the case of an empty container, the surface of the bottom wall of the container, but not the peripheral wall of the container.

In this manner, it can be ensured that only the level of the material in the container is measured and that false measurement results due to reflections of the radiation on the circumferential wall do not occur.

In another aspect, the cone base surface of the radiation emitted by the fill level sensor may correspond to a maximum cone base surface that can be completely inscribed into the bottom wall surface on the bottom wall.

In other words, the radiation emitted by the fill level sensor may fan out to such an extent that it has a maximum possible extension at the level of the bottom wall without touching the peripheral wall.

By fanning out the radiation emitted by the fill level sensor in this way, it can be ensured that as large a surface area as possible of the material stored in the container can be used for level detection without obtaining false measurements due to the peripheral wall.

In another aspect, the container may be a rectangular container and the peripheral wall comprises two opposing short first sidewalls and two opposing long second sidewalls.

In other words, the container may comprise the rectangular bottom wall, at the edges of which first short side walls and second long side walls extend away from the bottom wall at right angles. Each short first sidewall is adjacent to two long second sidewalls and each long second sidewall is adjacent to two short first sidewalls.

In another aspect, the fill level sensor may be provided centred in a width direction in one of the first sidewalls.

In other words, the fill level sensor may be integrated in one of the first short side sidewalls. The fill level sensor is positioned at an equal distance to the both second long side walls adjacent to the first sidewall.

By providing the fill level sensor in the first shorter side wall, it is possible to achieve the most extensive coverage possible of the surface of the material contained in the container with a cone-shaped radiation geometry of the radiation emitted by the fill level sensor. By positioning the fill level sensor centrally, the largest possible area of the surface of the material can be reached directly by the radiation without coming into contact with the first side walls or the second side walls.

According to the invention, the first sidewalls and the second sidewalls are hinged to the bottom wall.

In other words, the container according to the present invention is a foldable container. The first sidewalls and the second sidewalls can be folded completely onto each other and onto the bottom wall. In yet other words, the first side walls and the second side walls may lie completely parallel to each other and / or to the bottom wall in the folded state.

In this way, a space-saving storage of the empty containers and a space-saving transport of the empty containers is possible.

In another aspect, the container may be an "Intermediate Bulk Container (IBC).

In another aspect, the fill level sensor may be sealed fluid-tight to a container interior.

In other words, the fill level sensor may be sealed with a sealing plate, which is in a plane with an inner surface of the peripheral wall. The sealing plate and peripheral wall are connected to each other in such a way that no liquid and / or dust from inside the container can get into the fill level sensor. The sealing plate is preferably a transparent plate for the radiation of the sensor. In particular, the sealing plate is preferably made of a transparent polymer.

By sealing the sensor against liquids and dust, the container can be used for storing a wide variety of materials without the sensor being damaged by the material. In addition, penetrating liquid or particles could falsify the detection result of the fill level sensor without this being noticed in time.

In another aspect, the fill level sensor may be accessible from an outside of the container by means of a service door.

In other words, an opening may be formed on the outside in the peripheral wall of the container, which allows access of the fill level sensor from the outside. The access can be used to equip the fill level sensor with energy storage devices, preferably batteries or accumulators. Alternatively, fixed or semi-fixed energy storage devices can be charged via the access with the aid of a charging cable. The service door can be flush with an outside perimeter wall and seal the fill level sensor against the outside against liquids and dust.

In another aspect, the fill level sensor may use the size of the projected radiation on the surface of the material contained in the container to determine the level in the container.

In other words, due to the cone shape of the radiation emitted by the sensor, the projected area / projection of the radiation on the surface of the material contained in the container may different at each height perpendicular to the bottom surface of the container. The sensor can detect the size of the projected area on the surface of the material, compare the value with a stored database and thus reliably determine the level of the material in the container.

In another aspect, the angle between the radiation emitted by the fill level sensor and the peripheral wall, in which the sensor is located, may be between 1 ° and 75 °. Preferably, the angle may be at most 50 °.

According to the invention, the container is formed from a polymeric material.

In another aspect, a distance between the sensor and a top edge of the container may be at most 15 percent of the container height perpendicular to the bottom wall.

In another aspect, the sensor may transmit the detected level wirelessly to an evaluation device and/or a display device. The wireless transmission may preferably be implemented via wifi or bluetooth.

In another aspect, the sensor may be provided with a rechargeable battery.

### Brief description of the drawings

In the following, the disclosure will be described in greater detail by means of the accompanying drawings. The figures are of a schematic nature only and are intended solely for the purpose of understanding the disclosure.
Fig. 1 is a perspective view of a container according to the disclosure, wherein a corner section of the container is cut out and a radiation cone of the fill level sensor is shown; and
Fig. 2 is the perspective view of the container according to the disclosure, wherein the corner section of the container is cut out and the radiation cone with different horizontal levels of the fill level sensor is shown.

### Detailed description of the drawings

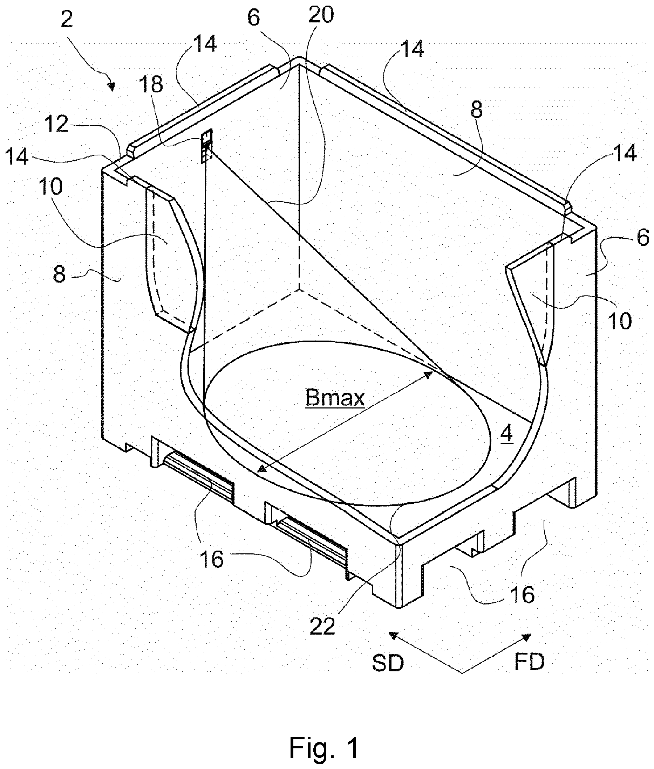

Fig. 1 shows a container 2 according to the disclosure. The container 2 is preferably made of plastic and comprises a bottom wall 4, two opposing short first sidewalls 6 and two opposing long second sidewalls 8. The first sidewalls 6 and the second sidewalls 8 extend away from the bottom wall 4 substantially at right angles. The sidewalls 6 and 8 are closed sidewalls. That is, the level of material stored in the container 2 cannot be seen from the outside.

One of the first sidewalls 6 and one of the second sidewalls comprises an opening flap 10. The opening flap 10 is preferably hinged to the corresponding first sidewall 6 or second sidewall 8 and thus can be opened to provide lateral access to the container 2.

The first sidewalls 6 and the second sidewalls 8 comprise a peripheral edge 12 on a side facing away from the bottom wall 4. The peripheral edge 12 is provided with latching bars 14. The latching bars 14 are provided to fix further containers 2 of the same design or a lid (not shown) in a stacked state in a non-slip, preferably form-fitting manner.

The bottom wall 4 comprises skid openings 16 which are designed to lift and transport the container 2 with a forklift truck, a pallet truck or the like.

One of the first sidewalls 6, preferably the first sidewall 6 in which no opening flap 10 is formed, contains a fill level sensor 18. The fill level sensor 18 is formed in an upper end portion of the first sidewall 6 (distanced from the bottom wall 4). The fill level sensor 18 takes up at most 10% of a wall area of the first sidewall 6. Furthermore, the fill level sensor 18 is provided completely flush / flat and without protrusion in the first sidewall 6. Preferably, the fill level sensor 18 is supplied with energy from an integrated (rechargeble) battery. Preferably, the fill level sensor 18 is provided with a sealing (plate) (not shown) towards an interior of the container 2.

The fill level sensor 18 emits radiation 20 towards the bottom wall 4 of the container 2 in an oblique direction. The radiation 20 has a conical shape that expands from the fill level sensor 18 towards the floor wall 4. In other words, the radiation 20 fans out linearly in a round, preferably circular, shape, starting from the fill level sensor 18. The radiation 20 is emitted in an acute angle with respect to the first sidewall 6 containing the fill level sensor 18. In other words, a normal to a cone bottom of the cone shape of the radiation 20 is oriented at an acute angle to the first sidewall 6 containing the fill level sensor 18. The cone shaped radiation 20 reaches the bottom wall 4 in a case where the container 2 is empty. A first resulting projection 22 of the radiation 20 has an oval shape. The first resulting projection 22 of the radiation 20 has an oval shape, with the first resulting projection 22 extending less in a first direction FD parallel to the first sidewalls 6 than in a second direction SD parallel to the second sidewalls 8. The maximum extension Bmax of the first resulting projection 22 of the radiation 20 at a level of the bottom wall 4 in the first direction FD corresponds to the inner width of the container 2 in the first direction FD. In other words, preferably the radiation 20 emitted by the fill level sensor 18 does not come into contact with first sidewalls 6 or second sidewalls 8 at any point.

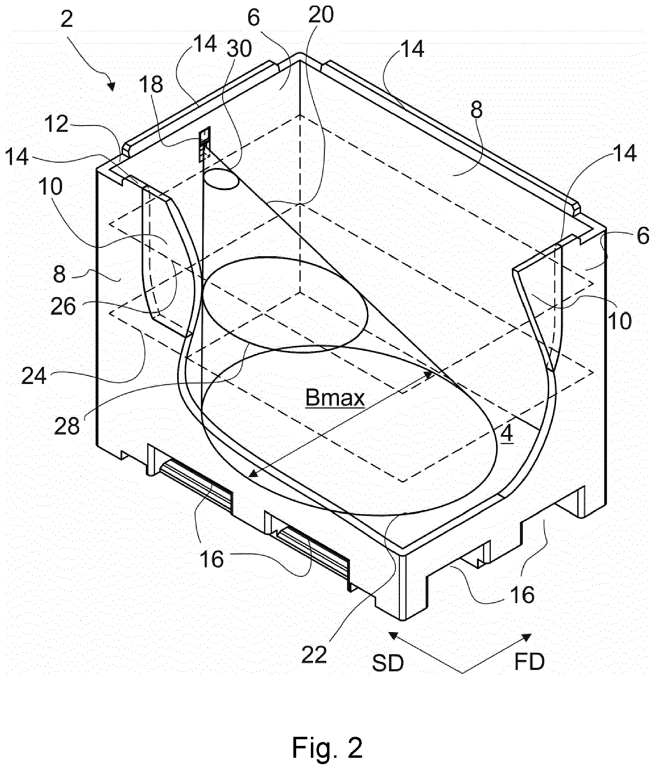

Fig. 2 essentially discloses the container 2 from Fig. 1, which is why a further description of the elements already described, is dispensed. In addition to that disclosed in Fig. 1, Fig. 2 discloses a first imaginary material surface 24 and a second imaginary material surface 26, where the first imaginary material surface 24 illustrates a state in which the container 2 is approximately half full of material and the second imaginary material surface 26 illustrates a state in which the container 2 is approximately filled to a maximum load height. More specifically, Fig. 2 discloses the first resulting projection 22 at a level of the bottom wall 4, a second resulting projection 28 at a level of the first imaginary material surface 24 and a third resulting projection 30 at a level of the second imaginary material surface. As can be seen in Fig. 2, the area of the resulting projection (22; 28; 30) reduces with increasing height above the bottom wall 4 of the container 2.

In a first preferred embodiment, the time span taken for the radiation 20 to travel from the fill level sensor 18 to a surface of the material and back after reflection is determined. From this time span, the distance between the fill level sensor and the material surface and thus the level can be determined.

Preferably, a number of time spans are determined and an average value is formed from them.

In another preferred embodiment, the area of the resulting projection (22; 28; 30) is detected on the surface. By comparing the detected area with a stored database, a fill level of the container can be determined.

In another preferred embodiment, both the time of flight and the area of the resulting projection (22; 28; 30) can be used to determine the fill level. In this way, a validation of the detected fill level is possible.

A service door (not shown) can be formed on an outside of the container (2) at the position of the fill level sensor 18 to service and/or charge the battery of the fill level sensor 18 and/or replace any other energy storage device. The service door can essentially correspond in its dimensions to the planar expansion of the fill level sensor 18 in the first sidewall 6.

### List of reference signs

- 2: container
- 4: bottom wall
- 6: first sidewall
- 8: second sidewall
- 10: opening flap
- 12: peripheral edge
- 14: latching bar
- 16: skid opening
- 18: fill level sensor
- 20: radiation
- 22: first resulting projection
- 24: first imaginary material surface
- 26: second imaginary material surface
- 28: second resulting projection
- 30: third resulting projection
- FD: first direction
- SD: second direction
- Bmax: maximum extension

## Claims

1. Foldable container (2) formed from a polymeric material comprising
a bottom wall (4),
a peripheral wall comprising first and second sidewalls hinged to the bottom wall; and
a fill level sensor (18) provided in the peripheral wall for measuring a level of a stored material, in particular a liquid filling material, located in the container (2);
wherein the fill level sensor (18) emits radiation (20) for determining the level at an acute angle, relative to the peripheral wall, in a direction to the bottom wall (4).

2. The foldable container (2) according to claim 1, **characterized in that** the fill level sensor (18) is integrated completely and without protrusion in the peripheral wall.

3. The foldable container (2) according to claim 1 or claim 2, **characterized in that** the fill level sensor (18) determines the level in the container (18) by (means of) a time of flight.

4. The foldable container (2) according to claim 3, **characterized in that** the fill level sensor (18) determines the level in the container (2) by means of a radar principle, in particular by means of a pulsed coherent radar (PCR) principle.

5. The foldable container (2) according to one of claim 1 to 4, **characterized in that** the fill level sensor (18) is exclusively provided in a quarter portion of the peripheral wall facing away from the bottom wall (4).

6. The foldable container (2) according to one of claim 1 to 5, **characterized in that** the radiation (20) emitted by the fill level sensor (18) is emitted in a pointed cone shape, wherein a cone tip is arranged in the fill level sensor (18).

7. The foldable container (2) according to claim 6, **characterized in that** a cone base surface of the radiation (20) is completely inscribable into a bottom wall surface of the bottom wall (4).

8. The foldable container (2) according to claim 7, **characterized in that** the cone base surface corresponds to a maximum cone base surface that can be completely inscribed into the bottom wall surface of the bottom wall (4).

9. The foldable container (2) according to one of claim 1 to 8, **characterized in that** the container (2) is a rectangular container and the peripheral wall comprises the two opposing short first sidewalls (6) and the two opposing long second sidewalls (8).

10. The foldable container (2) according to claim 9, **characterized in that** the fill level sensor (18) is provided centred in a width direction in one of the first sidewalls (6).

11. The foldable container (2) according to one of claim 1 to 10, **characterized in that** the container (2) is an "Intermediate Bulk Container", IBC.

12. The foldable container (2) according to one of claim 1 to 11, **characterized in that** the fill level sensor (18) is sealed fluid-tight to a container interior.

13. The foldable container (2) according to one of claim 1 to 12, **characterized in that** the fill level sensor (18) is accessible from an outside of the container (2) by means of a service door.

## Patentansprüche

1. Klappbarer Behälter (2) aus einem Polymerwerkstoff mit
einer Bodenwand (4),
einer Umfangswand mit ersten und zweiten Seitenwänden, die an der Bodenwand anscharniert sind; und
einem Füllstandssensor (18), der in der Umfangswand vorgesehen ist, um einen Füllstand eines gelagerten Stoffs, insbesondere eines flüssigen Stoffs, welcher sich in dem Behälter (2) befindet, zu bestimmen;
**dadurch gekennzeichnet, dass**
der Füllstandssensor (18) eine Strahlung (20) zur Bestimmung des Füllstandes in einem spitzen Winkel relativ zur Umfangswand in Richtung hin zu der Bodenwand (4) abgibt.

2. Klappbarer Behälter (2) nach Anspruch 1, **dadurch gekennzeichnet, dass** der Füllstandssensor (18) vollständig und ohne Überstand in die Umfangswand integriert ist.

3. Klappbarer Behälter (2) nach Anspruch 1 oder Anspruch 2, **dadurch gekennzeichnet, dass** der Füllstandssensor (18) den Füllstand im Behälter (18) mittels einer Laufzeit ermittelt.

4. Klappbarer Behälter (2) nach Anspruch 3, **dadurch gekennzeichnet, dass** der Füllstandssensor (18) den Füllstand im Behälter (2) mittels eines Radarprinzips, insbesondere mittels eines gepulsten kohärenten Radarprinzips (PCR), ermittelt.

5. Klappbarer Behälter (2) nach einem der Ansprüche 1 bis 4, **dadurch gekennzeichnet, dass** der Füllstandssensor (18) ausschließlich in einem von der Bodenwand (4) abgewandten Viertel der Umfangswand vorgesehen ist.

6. Klappbarer Behälter (2) nach einem der Ansprüche 1 bis 5, **dadurch gekennzeichnet, dass** die vom Füllstandssensor (18) emittierte Strahlung (20) in einer spitzen Kegelform emittiert wird, wobei im Füllstandssensor (18) eine Kegelspitze angeordnet ist.

7. Klappbarer Behälter (2) nach Anspruch 6, **dadurch gekennzeichnet, dass** eine Kegelgrundfläche der Strahlung (20) vollständig in eine Bodenwandfläche der Bodenwand (4) einschreibbar ist.

8. Klappbarer Behälter (2) nach Anspruch 7, **dadurch gekennzeichnet, dass** die Kegelgrundfläche einer maximalen Kegelgrundfläche entspricht, die vollständig in die Bodenwandfläche der Bodenwand (4) einbeschreibbar ist.

9. Klappbarer Behälter (2) nach einem der Ansprüche 1 bis 8, **dadurch gekennzeichnet, dass** der Behälter (2) ein rechteckiger Behälter ist und die Umfangswand aus den beiden gegenüberliegenden kurzen ersten Seitenwänden (6) und den beiden gegenüberliegenden langen zweiten Seitenwänden (8) besteht.

10. Klappbarer Behälter (2) nach Anspruch 9, **dadurch gekennzeichnet, dass** der Füllstandssensor (18) in einer der ersten Seitenwände (6) in Breitenrichtung zentriert angeordnet ist.

11. Klappbarer Behälter (2) nach einem der Ansprüche 1 bis 10, **dadurch gekennzeichnet, dass** der Behälter (2) ein "Intermediate Bulk Container" (IBC) ist.

12. Klappbarer Behälter (2) nach einem der Ansprüche 1 bis 11, **dadurch gekennzeichnet, dass** der Füllstandssensor (18) flüssigkeitsdicht hin zu einem Behälterinnenraum verschlossen ist.

13. Klappbarer Behälter (2) nach einem der Ansprüche 1 bis 12, **dadurch gekennzeichnet, dass** der Füllstandssensor (18) von einer Außenseite des Behälters (2) mittels einer Serviceklappe zugänglich ist.

## Revendications

1. Récipient pliable (2) formé à partir d'un matériau polymère comprenant
une paroi inférieure (4),
une paroi périphérique comprenant des première et seconde parois latérales articulées sur la paroi inférieure ; et
un capteur de niveau de remplissage (18) prévu dans la paroi périphérique pour mesurer un niveau d'un matériau stocké, en particulier un matériau de remplissage liquide, situé dans le récipient (2) ;
dans lequel le capteur de niveau de remplissage (18) émet un rayonnement (20) pour déterminer le niveau selon un angle aigu, par rapport à la paroi périphérique, en direction de la paroi inférieure (4).

2. Récipient pliable (2) selon la revendication 1, **caractérisé en ce que** le capteur de niveau de remplissage (18) est intégré complètement et sans saillie dans la paroi périphérique.

3. Récipient pliable (2) selon la revendication 1 ou la revendication 2, **caractérisé en ce que** le capteur de niveau de remplissage (18) détermine le niveau dans le récipient (18) par (l'intermédiaire d') un temps de vol.

4. Récipient pliable (2) selon la revendication 3, **caractérisé en ce que** le capteur de niveau de remplissage (18) détermine le niveau dans le récipient (2) par l'intermédiaire d'un principe du radar, en particulier par l'intermédiaire d'un principe du radar cohérent pulsé (PCR).

5. Récipient pliable (2) selon l'une des revendications 1 à 4, **caractérisé en ce que** le capteur de niveau de remplissage (18) est prévu exclusivement dans une partie quart de la paroi périphérique orientée à l'opposé de la paroi inférieure (4).

6. Récipient pliable (2) selon l'une des revendications 1 à 5, **caractérisé en ce que** le rayonnement (20) émis par le capteur de niveau de remplissage (18) est émis sous une forme conique pointue, dans lequel une pointe de cône est agencée dans le capteur de niveau de remplissage (18).

7. Récipient pliable (2) selon la revendication 6, **caractérisé en ce qu'**une surface de base conique du rayonnement (20) peut être entièrement inscrite dans une surface de paroi inférieure de la paroi inférieure (4).

8. Récipient pliable (2) selon la revendication 7, **caractérisé en ce que** la surface de base conique correspond à une surface de base conique maximale qui peut être entièrement inscrite dans la surface de paroi inférieure de la paroi inférieure (4).

9. Récipient pliable (2) selon l'une des revendications 1 à 8, **caractérisé en ce que** le récipient (2) est un récipient rectangulaire et la paroi périphérique comprend les deux premières parois latérales courtes opposées (6) et les deux secondes parois latérales longues opposées (8).

10. Récipient pliable (2) selon la revendication 9, **caractérisé en ce que** le capteur de niveau de remplissage (18) est prévu de manière à être centré dans une direction de largeur dans l'une des premières parois latérales (6).

11. Récipient pliable (2) selon l'une des revendications 1 à 10, **caractérisé en ce que** le récipient (2) est un « grand récipient pour vrac », IBC.

12. Récipient (2) selon l'une des revendications 1 à 11, **caractérisé en ce que** le capteur de niveau de remplissage (18) est scellé de manière étanche aux fluides à l'intérieur du récipient.

13. Récipient pliable (2) selon l'une des revendications 1 à 12, **caractérisé en ce que** le capteur de niveau de remplissage (18) est accessible depuis l'extérieur du récipient (2) par l'intermédiaire d'une porte de service.
